# EUROPEAN PATENT APPLICATION

(11) **EP 4 687 084 A1**
(43) Date of publication of application: **04.02.2026**
(21) Application number: 25191269.7
(22) Date of filing: 23.07.2025
(51) Int. Cl.: G06Q 10/0635, G06Q 10/0639, G06Q 10/087, G06Q 10/083

(54) **BATCH RECALL ASSESSMENT**

(30) Priority: 31.07.2024 US 202418789712
(71) Applicant: HONEYWELL INTERNATIONAL INC., Charlotte, NC 28202 (US)
(72) Inventor: SINGH, Ankit, Charlotte, 28202 (US); SINGH, Varun, Charlotte, 28202 (US)
(74) Representative: Haseltine Lake Kempner LLP

(57) **Abstract**

Approaches for automated batch recall assessment are described. The approach includes identifying product batches having a plurality of faulty products manufactured by the organization. For each of the identified product batches, a plurality of quality concerns raised for faulty products manufactured as part of the product batch are quantified. Accordingly, for each product batch, the quantified values of each of the plurality of quality concerns is compared with a corresponding pre-determined threshold count value to enable determination of a quality risk level associated with the product batch. Based on the quality risk level, a batch recall assessment is performed to determine whether to recall product batches having the plurality of faulty products. Thus, the described approaches provide an automated technique for early detection of problematic batches, facilitating quick decision-making on potential batch recalls and improving overall quality management in manufacturing processes.

## Description

### BACKGROUND

Various products, such as pharmaceutical products, vehicles, electronic devices, daily-use products, etc., are typically manufactured and distributed in product batches. A product batch, for instance, may include N number of packets of a medicine, manufactured at the same time or using the same process and raw material. Whenever certain products within a particular product batch, distributed by the manufacturer to suppliers or customers, are identified to be severely defective or unsafe for use or consumption, the particular product batch may be recalled as a whole. The defective or unsafe products may be identified through various means. For instance, the defective or unsafe products may be identified during the manufacturer's internal quality-related investigations or upon processing a customer's complaint or based on observation of regulatory bodies, such as the food and drug administration (FDA).

Recalling product batches may lead to heavy monetary losses for the organization. However, not recalling product batches having severely defective or unsafe products may jeopardize consumer's lives and may lead to huge reputational and financial damage for the organization. Further, the organization may suffer regulatory penalties or legal repercussions. Thus, it is important for an organization to properly investigate and make decisions about recalling product batches.

### BRIEF DESCRIPTION OF FIGURES

Systems and/or methods are now described, in accordance with examples of the present subject matter and with reference to the accompanying figures, in which:
FIG. 1 illustrates a system for batch recall assessment by assessing quality risk associated with a product batch, according to an example;
FIG. 2 illustrates a computing environment implementing the system for batch recall assessment by assessing quality risk associated with the product batch, according to an example;
FIG. 3A illustrates a flow chart depicting an exemplary sequence for identifying product batches having faulty products using raw quality parameter data, according to an example;
FIG. 3B illustrates a diagram illustrating correlation establishment between parameters of the raw quality parameter data, according to an example;
FIG. 4A to 4D illustrate a method for batch recall assessment by assessing quality risk associated with a product batch, according to an example;
FIG. 5 illustrates a method for determining threshold count values for utilizing while assessing quality risk associated with a product batch, according to an example; and
FIG. 6 illustrates a computing environment implementing a non-transitory computer-readable medium for batch recall assessment by assessing quality risk associated with a product batch, according to an example.

### DETAILED DESCRIPTION

Typically, organizations have dedicated human resources for making decisions about recalling a particular product batch. For an organization, the dedicated human resources may perform quality checks for products manufactured by the organization to detect if any product is defective or unsafe. The dedicated human resources may process complaints from customers to detect if any product is defective or unsafe. Upon ascertaining, through any means, that some products manufactured by the organization are defective or unsafe, the dedicated human resources may perform investigations to check the nature and severity of flaws within the defective or unsafe products. Based on the investigation, the dedicated human resources make decision on whether to recall the product batches having such defective or unsafe products.

However, for making decision about recalling product batches, the dedicated human resources are required to go through various phases of investigations. Different human resources may be responsible for carrying out investigation at different phases. At each phase, investigation may be performed for different purposes. For instance, a quality manager of an organization may initially assign tasks to quality process owners for performing investigations to check quality of the products of the organization. After investigation, the quality process owners may prepare a quality report and share the quality report with the quality manager. The quality manager may then finalize the quality report and forward the quality report to a risk process manager. The risk process manager may assign the quality report to risk process owners for performing investigation to check the severity of risk if the product batches having defective or unsafe products are not recalled. After investigation, the risk process owners may prepare a risk report having a decision regarding recall and share the risk report with the risk process manager. The risk process manager may then finalize the risk report and forward the risk report and the quality report to an executive manager. The executive manager may then be responsible for going through the risk and quality reports and making a final decision on whether to recall the product batches having the defective or unsafe products. Different organizations may thus have such time and cost intensive multiple phases of investigations before finally making a decision on product batch recalls.

Due to high dependency on human resources and existence of various phases of investigations involving manual effort, the process of making a recall decision becomes a time consuming and a tedious task, leading to unnecessary delays in making the recall decision. Delay in making the recall decision may turn out to be highly disadvantageous for the organization as such a delay may increase regulatory penalties, customer compensations, legal liabilities, and damage control costs. Further, risks of human errors while making the recall decision are also typically high. Such human errors may either lead to recalling of product batches which were not required to be recalled, or non-recalling of product batches which were actually required to be recalled. Errors in the recall decision may jeopardize lives of the consumers of the products and may lead to unnecessary monetary losses for the organization. The problems associated with the delay and the errors in the recall decision may further escalate as the number of products and product batches belonging to the organization increases. Thus, the traditional techniques are highly inefficient in timely and accurately identifying product batches which should be recalled. Therefore, there is a need for techniques that efficiently make decisions for recalling product batches.

The present subject matter describes approaches for automated product recall assessment for one or more batches of products manufactured by an organization. The approach includes identifying product batches having a plurality of faulty products manufactured by the organization. In an example, a faulty product may be defined as a product for which at least one quality concern has been raised. A quality concern may be indicated by a respective quality parameter, such as a complaint received against a faulty product, a deviation associated with a faulty product, a corrective and preventive action (CAPA) taken for a faulty product, and a non-conformance assessment of a faulty product. For each of the identified product batches, a plurality of quality concerns raised for faulty products manufactured as part of the product batch are quantified. Accordingly, for each product batch, the quantified values of each of the plurality of quality concerns is compared with a corresponding pre-determined threshold count value to enable determination of a quality risk level associated with the product batch. Based on the quality risk level, a batch recall assessment is performed to determine whether to recall product batches having the plurality of faulty products. Thus, the present subject matter provides a simple and robust analytical approach for early, quick, efficient, and automated detection of product batches having faulty products and product batches which should be recalled considering the quality risk level. The described approaches provide an efficient, automated technique for early detection of problematic batches, facilitating quick decision-making on potential batch recalls and improving overall quality management in manufacturing processes.

In an example implementation of the present subject matter, for identifying the product batches having the plurality of faulty products, product data corresponding to each of the plurality of faulty products may be initially obtained. For each of the plurality of faulty products, the corresponding product data may include quality data including a quantity parameter describing the quality concern raised for the faulty product and batch data indicating batch number of a product batch associated with the faulty product. The batch data may facilitate in identifying the product batches corresponding to the plurality of faulty products. In an example, the plurality of faulty products may be clustered into a plurality of product clusters based on the batch number obtained from the batch data of the faulty product. Each product cluster may include faulty products, from the plurality of faulty products, manufactured as part of a same product batch indicated by a single batch number. Further, each product cluster may correspond to a single product batch corresponding to the single batch number.

Subsequently, for each of the identified product batches, a corresponding count value may be determined for each of the plurality of quality parameters. For determining the corresponding count value for the product batch, one or more faulty products, tagged with each of the plurality of quality parameters, may be identified from the product cluster corresponding to the product batch. For example, for a product batch having 100 products, a complaint may have been received against 10 faulty products, a deviation may be associated with 15 faulty products, a CAPA may have been taken for 5 faulty products, and a non-conformance assessment may have been performed for 10 faulty products. For each identified faulty product, a quality parameter description provided against the quality parameter in the quality data may be analyzed to ascertain if the quality parameter for the identified faulty product satisfies a predefined condition. The quality parameter description may provide details about the quality concern raised for the faulty product. Upon ascertaining that the quality parameter for the identified faulty product satisfies the predefined condition, the corresponding count value of the quality parameter may be increased by a numerical value of one. Upon ascertaining that the quality parameter for the identified faulty product does not satisfy the predefined condition, the identified faulty product may be disregarded by not updating the corresponding count value. The corresponding count value is thus increased only when the quality parameter for the identified faulty product satisfies the predefined condition. The predefined condition for the quality parameter may be a condition under which the quality parameter affects the quality risk of the product batch. Thus, the quality parameter for the identified faulty product is only taken into consideration for calculating the corresponding count value when it is ascertained that the quality parameter may have an effect on the quality and the quality risk.

The corresponding count value, for each product batch, may then be compared with the corresponding pre-determined threshold count value. In an example, the corresponding pre-determined threshold count value may be generated based on analysis of historical count values of the quality parameter associated with historically recalled product batches. Further, the corresponding pre-determined threshold count value, that is used to determine the quality risk level, may be determined separately for different product types. In an example, the corresponding pre-determined threshold count value may be updated every time a new product batch associated with the organization is recalled. The new product batch may not be a part of the plurality of historically recalled product batches. In an example, upon detecting that the new product batch is recalled, the corresponding predetermined threshold count value may be modified based on new product data corresponding to new faulty products within the new product batch.

Based on a difference between the corresponding count value and the corresponding pre-determined threshold count value, a corresponding status may be assigned to the respective quality parameter. The corresponding status may indicate whether the corresponding pre-determined threshold count value has been breached for the respective quality parameter. For example, a red status may be assigned to the respective quality parameter if the corresponding pre-determined threshold count value is determined to have been breached. Further, a green status may be assigned to the respective quality parameter if the corresponding predetermined threshold count value is not breached.

Further, for each product batch, the quality risk level may be identified based on the status of each quality parameter. In one example, a mapping table indicating a corresponding quality risk level for each different possible status combination of the plurality of quality parameters may be utilized for determining the quality risk level. For example, if all the quality parameters for a product batch are assigned green status, the corresponding quality risk level may be low risk. Similarly, for different possible status combinations of the plurality of quality parameters, the mapping table may indicate the corresponding quality risk level which may be one of a low risk, a medium risk, and a high risk. In an example, the mapping table may be generated based on a comparison of corresponding predetermined threshold count values of different quality parameters of the plurality of quality parameters. For example, the quality parameter having highest corresponding pre-determined threshold count value, amongst the plurality of quality parameters, may be assigned highest weightage for assigning the corresponding quality risk level to a product batch.

Thus, for each product batch, the corresponding statuses assigned to each of the plurality of quality parameters may be analyzed using the mapping table to determine the quality risk level associated with the product batch. The quality risk level may indicate the level of risk of the entire product batch having a manufacturing defect or flaw. For example, the quality risk level may be one of a low risk, a medium risk, and a high risk.

In an example, upon determining that the quality risk level associated with the product batch is above a threshold risk level, a batch risk notification may be generated. The batch risk notification may include recommendations for taking corrective actions, including recalling of the one or more product batches. In an example, when the corresponding pre-determined threshold count value is breached for a product batch, the present subject matter may suggest the organization to recall the product batch.

An example recommendation may be "Complaints have been received for 3% of products within the product batch and product batches for these product types have been recalled, historically, at a threshold of 4.5%. Please take corrective action on the product batch and monitor other parameters of deviations, non-conformances, and CAPAs. Overall batch risk is still low and this risk can go to high if the threshold for complaints is breached.". The example recommendation indicates that the corresponding count value (in percentage) for complaints is 3%, the corresponding pre-determined threshold count value for complaints is 4.5%, and the quality risk level of the product batch is low. Further, the example recommendation indicates that the batch risk may become high if the threshold for complaints is breached, which indicates that complaints may have highest weightage for determining the quality risk level for the product batch. Thus, upon receiving the batch risk notification, the organization may efficiently and quickly recall product batches or take other corrective actions to minimize the monetary losses incurred by the organization due to the faulty products.

The present subject matter thus provides automated techniques for recall assessment by identifying product batches corresponding to a plurality of faulty and ascertaining quality risk levels of the identified product batches. Automated assessment of batch recall based on the quality concerns, the predetermined threshold count, and the mapping table, not only makes the assessment accurate but also helps eliminate human errors. The described approaches enable early, quick, efficient, accurate, and automated detection of product batches having faulty products and product batches which should be recalled considering the quality risk level. Further, by disregarding the faulty products which do not satisfy the predefined conditions while determining the corresponding count value, the described approaches provide a filtering mechanism which further improves the accuracy of the batch risk notification. Further, by continuously updating the corresponding pre-determined threshold count value over time, the described approaches further improve the accuracy of the batch risk notification.

Moreover, since the mapping table is generated based on the comparison of the corresponding pre-determined threshold count values of different quality parameters of the plurality of quality parameters, a relative importance of each quality parameter is taken into consideration for assigning corresponding quality risk level to a product batch. The described approaches thus facilitate assignment of an accurate quality risk level to the product batch, thereby leading to further improvement in the accuracy of the batch risk notification. As a result, the described approaches help the organizations to avoid reputational damage, regulatory penalties, legal repercussions, or jeopardizing the customer's lives.

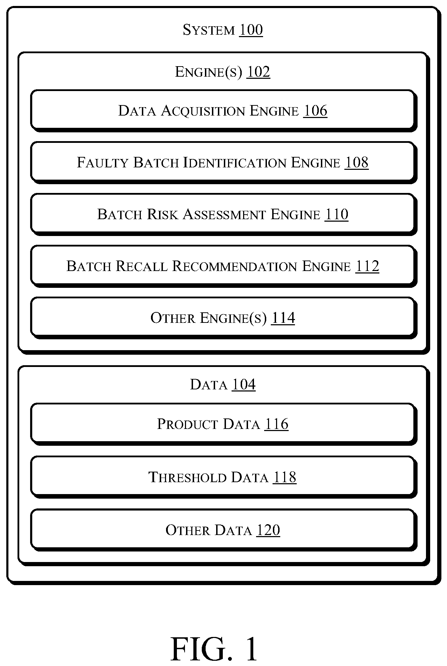

The present subject matter is further described with reference to FIG. 1 to FIG. 6. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

FIG. 1 illustrates a system 100 for batch recall assessment by assessing quality risk associated with a product batch, according to an example. In one example, the system 100 may be a distributed computing system having one or more physical computing systems geographically distributed at same or different locations. In another example, one or more components of the system 100 may be hosted virtually, for example, on a cloud-based platform, while other components may be geographically distributed at same or different locations. In yet another example, the system 100 may be a stand-alone physical system geographically located at a particular location. In an example, the system 100 may be utilized by organizations that aim to assess quality risk associated with their respective product batches.

In one example, the system 100 may include engine(s) 102 and data 104. The system 100 may also include additional components, such as display, input/output interfaces, operating systems, applications, and other software or hardware components (not shown in the figures).

The engine(s) 102 may be implemented as a combination of hardware and programming, for example, programmable instructions to implement a variety of functionalities of the engine(s) 102. In examples described herein, such combinations of hardware and programming may be implemented in several different ways. For example, the programming for the engine(s) 102 may be executable instructions. Such instructions may be stored on a non-transitory machine-readable storage medium which may be coupled either directly with the system 100 or indirectly (for example, through networked means). In an example, the engine(s) 102 may include a processing resource, for example, either a single processor or a combination of multiple processors, to execute such instructions. In the present examples, the non-transitory machine-readable storage medium may store instructions that, when executed by the processing resource, implement the engine(s) 102. In other examples, the engine(s) 102 may be implemented as electronic circuitry.

In one example, the engine(s) 102 may include a data acquisition engine 106, a faulty batch identification engine 108, a batch risk assessment engine 110, a batch recall recommendation engine 112, and other engine(s) 114. The other engine(s) 114 may further implement functionalities that supplement functions performed by the system 100 or any of the engine(s) 102.

The data 104 includes data that is either received, stored, or generated as a result of functions implemented by any of the engine(s) 102 or the system 100. It may be further noted that information stored and available in the data 104 may be utilized by the engine(s) 102 for performing various functions of the system 100. The data 104 may include product data 116, threshold data 118, and other data 120. The product data 116 may include data related to products manufactured by an organization hosting the system 100. The threshold data 118 may include data related to threshold values determined by the system 100. The other data 120 may include data that is either received, stored, or generated as a result of functions implemented by any of the engine(s) 102.

In operation, the data acquisition engine 106 may obtain product data corresponding to each of a plurality of faulty products manufactured by the organization. In an example, the product data may be obtained from a quality management system implemented for managing and storing data related to quality concerns raised for products manufactured by the organization. In another example, the product data may be pre-stored in a memory of the system 100 and may be obtained from the memory. For each of the plurality of faulty products, the corresponding product data may include batch data of the faulty product and quality data describing a quality concern raised for the faulty product. The batch data may be indicative of a particular product batch associated with the faulty product at the time of manufacturing of the faulty product. In an example, the batch data may include a corresponding batch number which may be a unique identifier assigned to the particular product batch. The quality data may include a quality parameter, from a plurality of quality parameters, indicating the quality concern raised for the faulty product. In an example, the plurality of faulty products may be products for which at least one quality concern has been raised. The quality concern may be indicated by a quality parameter, such as a complaint received against a faulty product, a deviation associated with a faulty product, a corrective and preventive action (CAPA) taken for a faulty product, and a non-conformance assessment of a faulty product. In one example, the product data may be stored as the product data 116.

Once the product data is obtained, for each faulty product of the plurality of faulty products, the faulty batch identification engine 108 may analyze the batch data to identify a corresponding batch number. The corresponding batch number may indicate a product batch associated with the faulty product at the time of manufacturing of the faulty product. Thus, analysis of the batch data facilities in identifying all the product batches to which the plurality of faulty products belongs.

Subsequently, for each product batch, the batch risk assessment engine 110 may determine a corresponding count value for each of the plurality of quality parameters. The corresponding count value may be indicative of a number of faulty products, associated with the product batch, tagged with the respective quality parameter in the corresponding quality data. For example, for a product batch having 100 products, the corresponding count value may indicate that a complaint has been received against 10 faulty products, a deviation has been associated with 15 faulty products, a CAPA has been taken for 5 faulty products, and a non-conformance assessment has been performed for 10 faulty products.

Further, for each product batch, the batch risk assessment engine 110 may compare, the count value corresponding to each quality parameter with a corresponding pre-determined threshold count value to determine a quality risk level associated with the product batch. The quality risk level may indicate the level of risk of the entire product batch having a manufacturing defect or flaw. For example, the quality risk level may be one of a low risk, a medium risk, and a high risk. In an example, the corresponding pre-determined threshold count value may be generated based on analysis of historical count values of the quality parameter associated with historically recalled product batches. In an example, the corresponding pre-determined threshold count value may be pre-generated and pre-stored in the system 100. The corresponding pre-determined threshold count values of the plurality of quality parameters may be the threshold data 118.

The batch recall recommendation engine 112 may then generate a batch risk notification for one or more product batches determined to have the quality risk level above a threshold risk level. The batch risk notification may include recommendations for taking corrective actions. In an example, the corrective actions may include recalling of the one or more product batches. In an example, the threshold risk level may be pre-determined and pre-stored in the system 100. The threshold risk level may be the threshold data 118. In an example, when the corresponding pre-determined threshold count value is breached for a product batch, the batch risk notification generated by the batch recall recommendation engine 112 may include a suggestion for the organization to recall the product batch.

An example batch risk notification may be "Complaints have been received for 3% of products within the product batch and product batches for these product types have been recalled, historically, at a threshold of 4.5%. Please take corrective action on the product batch and monitor other parameters of deviations, non-conformances, and CAPAs. Overall batch risk is still low and this risk can go to high if the threshold for complaints is breached.". The example batch risk notification indicates that the corresponding count value (in percentage) for complaints is 3%, the corresponding pre-determined threshold count value for complaints is 4.5%, and the quality risk level of the product batch is low. Thus, the described approaches generate an insightful batch risk notification for the organization, enabling the organization to efficiently and quickly recall product batches or take other corrective actions to minimize the monetary losses incurred by the organization due to the faulty products.

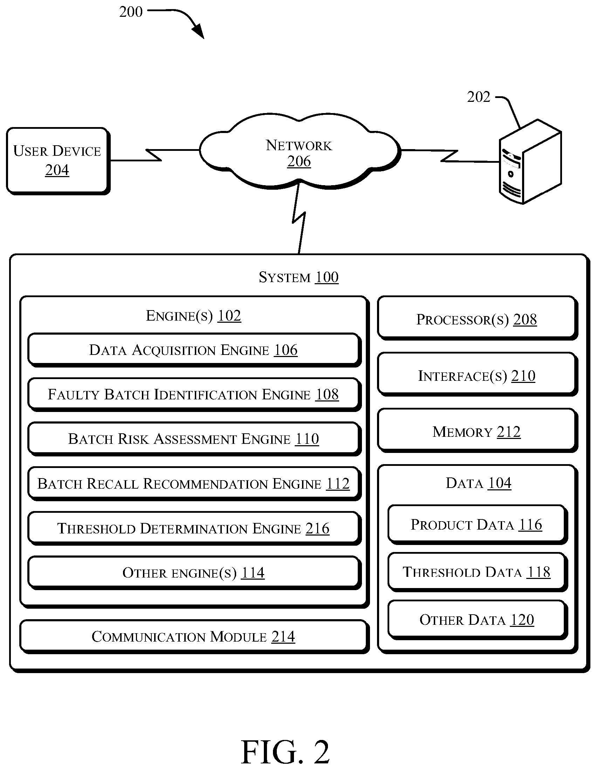

FIG. 2 illustrates a computing environment 200 implementing the system 100 for assessing quality risk associated with the product batch, according to an example. In one example, the computing environment 200 may include the system 100, a data server 202, and a user device 204.

In an example, the data server 202 may be configured to implement a quality management system for an organization. The quality management system may enable the organization to manage and store product data for products manufactured by the organization. The product data may include description of quality concerns raised for the products manufactured by the organization. In one example, the data server 202 may be managed by the organization. In another example, the data server 202 may be managed by a third party entity providing quality management services to the organization. In an example, the data server 202 may be a distributed computing system having one or more physical computing systems geographically distributed at same or different locations. In another example, one or more components of the data server 202 may be hosted virtually, for example, on a cloud-based platform, while other components may be geographically distributed at same or different locations. In yet another example, the data server 202 may be a stand-alone physical system geographically located at a particular location.

In an example, the user device 204 may be a device over which the system 100 may provide notification to a user, such as a quality manager of an organization, about product batches, manufactured by the organization, involving quality risks. Examples of the user device 204 may include, but are not limited to, a mobile phone, a laptop, a tablet, and a personal digital assistant (PDA). Although one user device 204 has been illustrated in FIG. 2 for the sake of brevity, it should be understood to a person skilled in the art that any number of user devices 204 may be connected with the system 100 to receive update about the quality of the product batches.

The system 100, the data server 202, and the user device 204 may be communicably coupled with each other over a communication network 206 and may exchange data and signals over the communication network 206. The communication network 206 may be a wireless network, a wired network, or a combination thereof. The communication network 206 may also be an individual network or a collection of many such individual networks, interconnected with each other and functioning as a single large network, e.g., the Internet or an intranet. Examples of such individual networks include local area network (LAN), wide area network (WAN), the internet, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN).

Depending on the technology, the communication network 206 may include various network entities, such as transceivers, gateways, and routers. In an example, the communication network 206 may include any communication network that uses any of the commonly used protocols, for example, Hypertext Transfer Protocol (HTTP), and Transmission Control Protocol/Internet Protocol (TCP/IP).

In one example, the system 100 may include processor(s) 208, interface(s) 210, memory 212, a communication module 214, the engine(s) 102, and the data 104. The system 100 may also include other components, such as display, input/output interfaces, operating systems, applications, and other software or hardware components (not shown in the figures).

The processor(s) 208 may be implemented as microprocessors, microcomputers, microcontrollers, digital signal processors, central processing units, state machines, logic circuitries, and/or other devices that manipulate signals based on operational instructions. The interface(s) 210 may allow the connection or coupling of the system 100 with one or more other devices, such as the data server 202 and the user device 204, through a wired (e.g., Local Area Network, i.e., LAN) connection or through a wireless connection (e.g., Bluetooth^{®}, Wi-Fi). The interface(s) 210 may also enable intercommunication between different logical as well as hardware components of the system 100.

The memory 212 may be a computer-readable medium, examples of which include volatile memory (e.g., RAM), and/or non-volatile memory (e.g., Erasable Programmable read-only memory, i.e., EPROM, flash memory, etc.). The memory 212 may be an external memory or an internal memory, such as a flash drive, a compact disk drive, an external hard disk drive, or the like. The memory 212 may further include the data 104 and/or other data which may either be received, utilized, or generated during the operation of the system 100.

The communication module 214 may be a wireless communication module. Examples of the communication module 214 may include, but are not limited to, Global System for Mobile communication (GSM) modules, Codedivision multiple access (CDMA) modules, Bluetooth modules, network interface cards (NIC), Wi-Fi modules, dial-up modules, Integrated Services Digital Network (ISDN) modules, Digital Subscriber Line (DSL) modules, and cable modules. In one example, the communication module 214 may also include one or more antennas to enable wireless transmission and reception of data and signals. The communication module 214 may allow the system 100 to transmit data and signals to one or more other devices, such as the data server 202 and the user device 204; and receive data and signals from the one or more other devices.

The engine(s) 102 may include the data acquisition engine 106, the faulty batch identification engine 108, the batch risk assessment engine 110, the batch recall recommendation engine 112, a threshold determination engine 216, and the other engine(s) 114.

In operation, whenever a quality concern is raised by a user against a faulty product, a record of the quality concern may be created and saved in the data server 202. The quality concern may be indicated by a quality parameter from a plurality of quality parameters. Examples of the quality parameters may include, but are not limited to, a complaint received against a faulty product, a deviation associated with a faulty product, a corrective and preventive action (CAPA) taken for a faulty product, and a non-conformance assessment of a faulty product. In an example, the complaint may be received from a consumer of the faulty product, a supplier of the faulty product, an external quality inspector, or a quality manager associated with the organization. In one example, quality manager associated with the organization may raise the complaint based on internal quality-related investigations.

The deviation may refer to positive or negative effects of the faulty products resulting from a divergence from expected or established standards. In an example, the CAPA may refer to any improvement made to an organisation's processes for quality assurance and to mitigate undesirable situations like product nonconformities. In an example, the non-conformance assessment may be done by the organization to check if a product of the organization fails to meet any specified requirements resulting in non-conformance. The non-conformance assessment may be initiated in view of manufacturer's internal quality-related investigations or upon receiving a customer's complaint or based on observation of regulatory bodies, such as the food and drug administration (FDA). Non-conformance may occur on the product, raw material used for manufacturing the product, and the manufacturing process followed by the organization to manufacture the product. Thus, any sort of non-conformance, such as not utilizing the management system correctly or not following standard operating procedures may lead to faulty products.

The data server 202 may record a quality parameter description against the quality parameter for each quality concern. For instance, for each complaint, a quality parameter description may include data fields, such as a complaint identifier (ID), a batch ID, a unique product ID (UID), a complaint type value, a risk assessment and ranking value, and a product status value. Further, for each deviation, a quality parameter description may include data fields, such as a deviation ID, a batch ID, a UID, a risk rating value, a severity value, and a disposition value. Further, for each CAPA, a quality parameter description may include data fields, such as a CAPA ID, a batch ID, a UID, a severity value, a category value, a risk priority number (RPN) category, and a threshold breach value. Furthermore, for non-conformance assessment, a quality parameter description may include data fields, such as a non-conformance ID, a batch ID, a UID, a product quality impact value, a product distributed value, a supplier value, a supplier status value, a supplier part number value, a product related value, a major category value, and a product quality value. While specific examples are given for data fields included in the quality parameter description for each quality parameter, it should be understood that the quality parameter description may include any other data fields defining the quality concern raised against the faulty product.

The complaint ID may be a unique identifier assigned to each complaint received for one or more faulty products. The deviation ID may be a unique identifier assigned to each deviation associated with one or more faulty products. The CAPA ID may be a unique identifier assigned to each CAPA taken for one or more faulty products. The non-conformance ID may be a unique identifier assigned to each instance of a non-conformance assessed for one or more faulty products. The UID may be a unique identifier assigned to a faulty product for which the quality concern has been raised. The batch ID may be a unique identifier assigned to a product batch within which the faulty product, for which the quality concern has been raised, was manufactured. The complaint type value may define a type of complaint. For example, the complaint type value may be "product" if the complaint has been received for a product belonging to the organization. The risk assessment and ranking value may indicate the severity of the complaint considering the nature of the complaint. For example, the risk assessment and ranking value may be "high" if the nature of the complaint is serious. The product status value may define the current status of the faulty product for which the quality concern is raised. For example, the product status value may be "product returned" if the product has been returned by the customer by whom the complaint has been raised.

For the quality parameter being the deviation, the risk rating value may indicate the level of risk involved with such a deviation. For example, the risk rating value may be "high" if the deviation involves high level of risk for the organization. Further, the severity value may indicate the severity of the deviation considering the nature of the deviation. For example, the severity value may be "high" if the nature of the deviation is serious. Further, the disposition value may indicate how the deviation is disposed. For example, the disposition value may be "return" if the faulty product, for which the deviation is created, is returned.

For the quality parameter being the CAPA, the severity value may indicate the severity of the CAPA considering the nature of the CAPA. For example, the severity value may be "high" if the nature of the CAPA is serious. Further, the category value may indicate whether the CAPA is taken for a product or a process. For example, the category value may be "product" if the CAPA is taken in relation to a product of the organization. Further, the RPN category may indicate the category, such as red, yellow, and green being associated to different ranges of RPN, within which the RPN falls for the CAPA. For example, the RPN category may be "red" if the RPN satisfies certain pre-defined conditions for the red category. Further, the threshold breach value may indicate whether the CAPA has breached a predetermined threshold value. For example, the threshold breach value may be "true" if the CAPA has breached the predetermined threshold value.

For the quality parameter being the non-conformance assessment, the major category value may describe whether the non-conformance is of a major category. For example, the major category value may be "yes" if the non-conformance is of a major category. Further, the product quality value may indicate whether the non-conformance is related to the quality of the faulty product or not. For example, the product quality value may be "yes" if the non-conformance is related to the quality of the faulty product. Furthermore, the product quality impact value, the product distributed value, the supplier value, the supplier status value, the supplier part number value, and the product related value may, in combination, indicate a particular faulty product for which the non-conformance assessment is done and a particular product batch to which the particular faulty product belongs.

In one example, the data server 202 may automatically determine values of one or more data fields for the quality parameter description based on information stored within the data server 202. In another example, the data server 202 may determine values of one or more data fields for the quality parameter description based on inputs received from users handling the particular quality concern within the organization.

The data server 202 may transmit product data to the system 100, in response to a request for the product data received from the system 100. The product data may indicate all the quality concerns with the quality parameter description for the products manufactured by the organization. In an example, the product data may correspond to a particular period of time. For example, the product data may correspond to a period of past one month or a period of past six months.

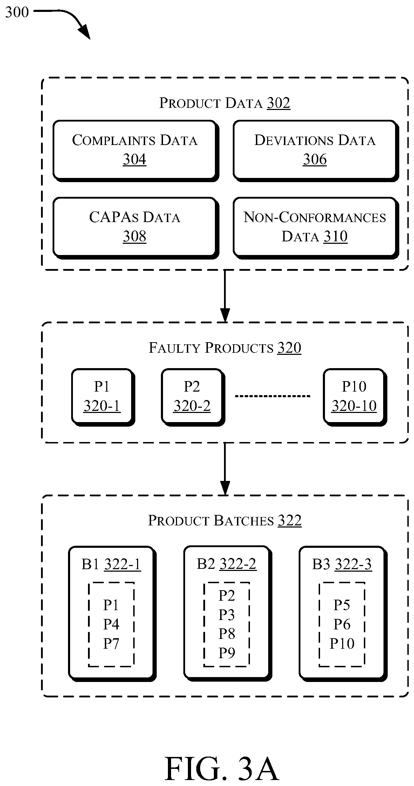

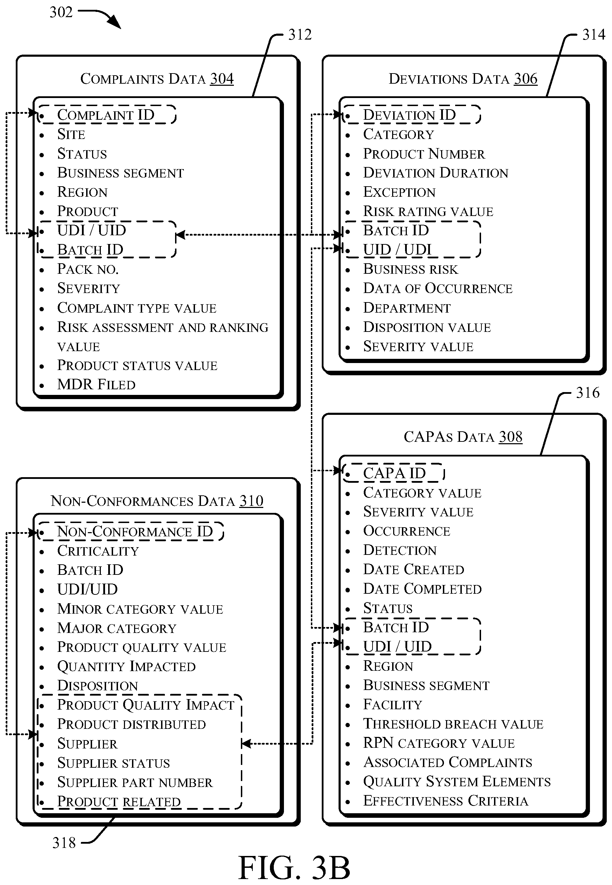

The communication module 214 of the system 100 may receive, from the data server 202, product data corresponding to each of a plurality of faulty products manufactured by the organization. For each of the plurality of faulty products, the corresponding product data may include batch data of the faulty product and quality data describing a quality concern raised for the faulty product. For the faulty product, the batch data may be indicative of a product batch associated with the faulty product at the time of manufacturing of the faulty product. For example, the batch data may include a corresponding batch number which may be the batch ID indicating the product batch. Further, for the faulty product, the quality data may include a quality parameter, from the plurality of quality parameters, indicating the quality concern raised for the faulty product. In an example, the quality data may include a quality parameter description for the quality parameter. The system 100 may utilize the product data to identify product batches having faulty products. The process followed by the system 100 for identifying product batches having faulty products using the product data, is further described with the help of FIG. 3A and FIG. 3B.

FIG. 3A illustrates a flow chart 300 depicting an exemplary sequence for identifying product batches having faulty products using product data 302, according to an example. Further, FIG. 3B illustrates a diagram illustrating correlation establishment between data fields of the product data 302, according to an example.

In an example, the product data 302 may include complaints data 304, deviations data 306, CAPAs data 308, and non-conformances data 310. The complaints data 304 may include a quality parameter description 312 of complaints received for a plurality of faulty products of the organization. The deviations data 306 may include a quality parameter description 314 of deviations associated with a plurality of faulty products of the organization. The CAPAs data 308 may include a quality parameter description 316 of the CAPAs taken for a plurality of faulty products of the organization. The non-conformances data 310 may include a quality parameter description 318 of the CAPAs taken for a plurality of faulty products of the organization. As previously described, the quality parameter description 312 of the complaints data 304 may include the data fields, such as the complaint ID, the batch ID, the UID/unique device ID (UDI), the complaint type value, the risk assessment and ranking value, and the product status value.

The quality parameter description 314 of the deviations data 306, as previously described, may include data fields such as the deviation ID, the batch ID, the UID, the risk rating value, the severity value, and the disposition value. Further, the quality parameter description 316 of the CAPAs data 308, as previously described, may include data fields such as the CAPA ID, the batch ID, the UID, the severity value, the category value, the RPN category, and the threshold breach value. Furthermore, the quality parameter description 318 of the non-conformances data 310, as previously described, may include data fields such as the non-conformance ID, the batch ID, the UID, the product quality impact value, the product distributed value, the supplier value, the supplier status value, the supplier part number value, the product related value, the major category value, and the product quality value. Using the data fields such as the batch ID, the UID/UDI, the product quality impact value, the product distributed value, the supplier value, the supplier status value, the supplier part number value, and the product related value, the complaints data 304, the deviations data 306, the CAPAs data 308, and the non-conformances data 310 may be correlated to each other, as depicted in FIG. 3B using dotted boxes and arrows. While specific examples are given for data fields included in the quality parameter descriptions 312, 314, 316, and 318 for each quality parameter, it should be understood that the quality parameter description may include any other data fields defining the quality concern raised against the faulty product.

The processor(s) 208 of the system 100 may analyze the product data 302 to identify a plurality of faulty products 320 manufactured by an organization. In an example, the plurality of faulty products 320 may be identified by referring to the UID within the quality parameter description of each quality concern. For the purpose of explanation, but not as a limitation, we may assume that ten faulty products P1 320-1, P2 320-2, ..., P10 320-10 have been illustrated to be identified by referring to the UID within the quality parameter description in the product data 302. The faulty products P1 320-1, P2 320-2, ..., P10 320-10 may be products for which at least one quality concern has been raised. For example, for the faulty product P1 320-1, a complaint, a deviation, and a non-conformance may be included in the product data 302. On the other hand, for the faulty product P1 320-2, only a complaint may be included in the product data 302 and the other quality parameter, i.e., the deviation, the CAPA, and the non-conformance may not be included in the product data 302.

During batch risk assessment for the organization, the data acquisition engine 106 of the system 100 may obtain the product data corresponding to each of the plurality of faulty products manufactured by the organization.

For each faulty product, of the plurality of faulty products, the faulty batch identification engine 108 may analyze the batch data to identify a corresponding batch number. The corresponding batch number may indicate a product batch associated with the faulty product at the time of manufacturing of the faulty product. In an example, the faulty batch identification engine 108 may cluster the plurality of faulty products 320 into a plurality of product clusters based on the batch number of each of the plurality of faulty products 320. Each product cluster may include faulty products, from the plurality of faulty products 320, manufactured as part of a same product batch indicated by a single batch number. Further, each product cluster may correspond to a single product batch corresponding to the single batch number. As depicted in FIG. 3A, by clustering the faulty products 320-1, 320-2, ..., 320-N according to the batch number, three product clusters corresponding to three product batches 322 are formed. A first product cluster corresponding to a first product batch 322-1 includes the faulty products P1, P4, and P7. A second product cluster corresponding to a second product batch 322-2 includes the faulty products P2, P3, P8, and P9. A third product cluster corresponding to a third product batch 322-3 includes the faulty products P5, P6, and P10. While three product batches 322 have been illustrated, as an example, it should be understood that the plurality of faulty products 320 may correspond to any number of product batches.

For each product batch, the batch risk assessment engine 110 may determine a corresponding count value for each of the plurality of quality parameters. The corresponding count value may be indicative of a number of faulty products, associated with the product batch, tagged with the respective quality parameter in the corresponding quality data. In an example, the UID in the corresponding quality data may be referred to identify the number of faulty products tagged with the respective quality parameter. For example, for a product batch having 100 products, the corresponding count value may indicate that a complaint has been received against 10 faulty products, a deviation has been associated with 15 faulty products, a CAPA has been taken for 5 faulty products, and a non-conformance assessment has been performed for 10 faulty products. In an example, the corresponding count value may be a percentage of a number of faulty products, associated with the product batch, tagged with the respective quality parameter.

In an example, for determining the corresponding count value for a particular quality parameter, the batch risk assessment engine 110 may identify one or more faulty products, associated with the product batch, tagged with the particular quality parameter. In an example, the one or more faulty products tagged with the quality parameter may be identified from the product cluster corresponding to the product batch. In an example, the one or more faulty products tagged with the quality parameter may be identified based on the UID within the quality parameter description.

For each identified faulty product, the batch risk assessment engine 110 may analyze the quality data to obtain the quality parameter description provided against the quality parameter. Further, for each identified faulty product, the batch risk assessment engine 110 may analyze the quality parameter description to ascertain if the quality parameter for the identified faulty product satisfies a predefined condition.

Upon ascertaining that the quality parameter for the identified faulty product satisfies the predefined condition, the batch risk assessment engine 110 may increase the corresponding count value of the quality parameter by a numerical value of one. Upon ascertaining that the quality parameter for the identified faulty product does not satisfy the predefined condition, the batch risk assessment engine 110 may disregard the identified faulty product by not updating the corresponding count value. The corresponding count value is thus increased only when the quality parameter for the identified faulty product satisfies the predefined condition. The predefined condition for the quality parameter may be a condition under which the quality parameter affects the quality risk of the product batch. Thus, the quality parameter for the identified faulty product is only taken into consideration for calculating the corresponding count value when it is ascertained that the quality parameter may have an effect on the quality and the quality risk.

In an example, when the respective quality parameter is a complaint received for a faulty product, the quality data may include the complaint type value, the risk assessment and ranking value, and the product status value. In this case, the predefined condition may include at least one of the complaint type value being product and the risk assessment and ranking value being high, and the product status value being product returned.

In an example, when the respective quality parameter is a deviation associated with a faulty product, the quality data may include the risk rating value, the severity value, and the disposition value. In this case, the predefined condition may include at least one of the risk rating value being high, the severity value being high, and the disposition value being return.

In an example, when the respective quality parameter is a CAPA taken for a faulty product, the quality data may include the severity value, the category value, the risk priority number (RPN) category, and the threshold breach value. In this case, the predefined condition may include at least one of the severity value being high, the category value being product, the RPN category being red, and the threshold breach value being true.

In an example, when the respective quality parameter is a non-conformance assessment of a faulty product, the quality data may include the major category value and the product quality value. In this case, the predefined condition may include at least one of the major category value being yes and the product quality value being yes.

In an example, once the corresponding count value is obtained for each of the plurality of quality parameters, the batch risk assessment engine 110 may compare, for each quality parameter, the corresponding count value with a corresponding pre-determined threshold count value to determine a quality risk level associated with the product batch. The quality risk level may indicate the level of risk of the entire product batch having a manufacturing defect or flaw. For example, the quality risk level may be one of a low risk, a medium risk, and a high risk. In an example, the corresponding pre-determined threshold count value may be generated based on analysis of historical count values of the quality parameter associated with historically recalled product batches. In an example, the corresponding pre-determined threshold count value may be pre-generated and pre-stored in the system 100. The corresponding pre-determined threshold count values of the plurality of quality parameters may be the threshold data 118.

In an example, the corresponding pre-determined threshold count value for each quality parameter may be pre-determined using a threshold determination model. For determining the corresponding pre-determined threshold count value, the threshold determination engine 216 of the system 100 may obtain historical product data, for each of a plurality of historically recalled product batches manufactured by the organization, corresponding to each historically identified faulty product associated with the historically recalled product batch. The historical product data corresponding to each historically identified faulty product may include historical quality data describing a quality concern raised for the historically identified faulty product. The historical quality data may include a quality parameter, from the plurality of quality parameters, indicating the quality concern raised for the historically identified faulty product.

For each historically recalled product batch, the threshold determination engine 216 may determine a corresponding historical count value for each of the plurality of quality parameters. The corresponding historical count value may be indicative of a number of historically identified faulty products, associated with the historically recalled product batch, tagged with the respective quality parameter.

The threshold determination engine 216 may then group the plurality of historically recalled product batches into one or more recalled batch groups based on a product type of products associated with each of the plurality of historically recalled product batches. In one example, the product type may depend on different categories of products. For instance, pharmaceutical products, mechanical devices, electronic devices, medicines for a particular disease, etc., may be different product types. In another example, variations of the same product may be identified as a particular product type. For example, a first medicine for a disease, a second medicine for the disease, a particular vehicle of a particular organization, etc. Each of the one or more recalled batch groups may include historically recalled product batches of same product type.

For each product type, the threshold determination engine 216 may determine the corresponding pre-determined threshold count value for each of the respective quality parameters using the threshold determination model and the corresponding historical count value determined for the historically recalled product batches grouped into the recalled batch group, corresponding to the product type.

In an example, the corresponding pre-determined threshold count value may be updated every time a new product batch associated with the organization is recalled. The threshold determination engine 216 may detect that the new product batch associated with the organization is recalled. The new product batch may not be a part of the plurality of historically recalled product batches. In an example, upon detecting that the new product batch is recalled, the threshold determination engine 216 may modify the corresponding pre-determined threshold count value based on new product data corresponding to new faulty products within the new product batch.

In an example, for determining the quality risk level based on the comparison of the corresponding count value with the corresponding predetermined threshold count value, for each product batch, the batch risk assessment engine 110 may assign a corresponding status to the respective quality parameter based on a difference between the corresponding count value and the corresponding pre-determined threshold count value. The corresponding status may indicate whether the corresponding pre-determined threshold count value has been breached for the respective quality parameter. For example, a red status may be assigned to the respective quality parameter if the corresponding pre-determined threshold count value is determined to have been breached. Further, a green status may be assigned to the respective quality parameter if the corresponding pre-determined threshold count value is not breached.

In one example, the batch risk assessment engine 110 may obtain a mapping table indicating a corresponding quality risk level for each different possible status combination of the plurality of quality parameters. For example, if all the quality parameters for a product batch are assigned green status, the corresponding quality risk level may be low risk. Similarly, for different possible status combinations of the plurality of quality parameters, the mapping table may indicate the corresponding quality risk level which may be one of a low risk, a medium risk, and a high risk. In an example, the mapping table may be generated based on a comparison of corresponding pre-determined threshold count values of different quality parameters of the plurality of quality parameters. For example, the quality parameter having highest corresponding pre-determined threshold count value, amongst the plurality of quality parameters, may be assigned highest weightage for assigning the corresponding quality risk level to a product batch. An exemplary mapping table is given as Table 1 below.

**Table 1**

| **Co** | **D** | **Ca** | **Nc** | **Product and batch risk profile** |
|---|---|---|---|---|
| Red | Red | Red | Red | High Risk |
| Green | Red | Red | Red | High Risk |
| Green | Green | Red / Green | Red | Medium Risk |
| Green | Red | Red / Green | Green | Medium Risk |
| Red | Green | Red / Green | Red / Green | Medium risk |
| Green | Green | Green | Green | Low risk |

Thus, for each product batch, the batch risk assessment engine 110 may compare the corresponding statuses assigned to each of the plurality of quality parameters with the mapping table to determine the quality risk level associated with the product batch. As will be understood the mapping table depicted in Table 1 is only exemplary and may be modified depending on various factors, such as product type, industry type, and product quality regulations.

Table 2 provided below depicts an exemplary batch risk assessment for a product batch having Batch ID "ABC12345". In said example, a total of 8000 products have been assumed to have been manufactured as a part of the product batch having the Batch ID "ABC12345". Count of relevant quality parameter, in each row of Table 2, respectively indicate the number of complaints, deviations, CAPAs, and non-conformances which satisfy the respective predefined conditions. Further, Table 2 indicates, for each quality parameter, i.e., complaints, deviations, CAPAs, and non-conformances, the corresponding count value, the pre-determined threshold count value, and the corresponding status.

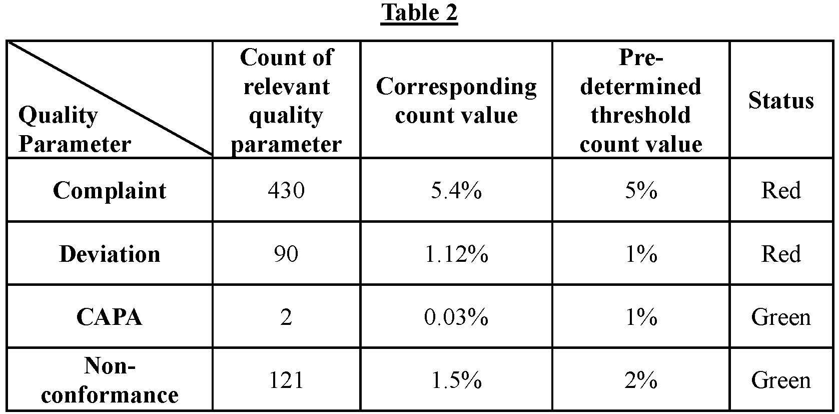

Subsequently, the batch recall recommendation engine 112 may generate a batch risk notification for one or more product batches determined to have the quality risk level above a threshold risk level. The batch risk notification may include recommendations for taking corrective actions. In an example, the corrective actions may include recalling of the one or more product batches. In an example, the threshold risk level may be pre-determined and pre-stored in the threshold data 118. In an example, when the corresponding pre-determined threshold count value is breached for a product batch, the batch risk notification generated by the batch recall recommendation engine 112 may include a suggestion for the organization to recall the product batch.

An example batch risk notification may be "Complaints have been received for 3% of products within the product batch and product batches for these product types have been recalled, historically, at a threshold of 4.5%. Please take corrective action on the product batch and monitor other parameters of deviations, non-conformances, and CAPAs. Overall batch risk is still low and this risk can go to high if the threshold for complaints is breached.". The example batch risk notification indicates that the corresponding count value (in percentage) for complaints is 3%, the corresponding pre-determined threshold count value for complaints is 4.5%, and the quality risk level of the product batch is low. Thus, the described approaches generate an insightful batch risk notification for the organization.

In an example, the communication module 214 of the system 100 may transmit the batch risk notification to the user device 204. The communication module 214 may transmit the batch risk notification to the user device 204 over the communication network 206. The user device 204 may receive the batch risk notification and may present the batch risk notification to a quality manager on a display (not illustrated in figures) of the user device 204. The batch risk notification enables the quality manager of the organization to efficiently and quickly recall product batches or take other corrective actions to minimize the monetary losses incurred by the organization due to the faulty products.

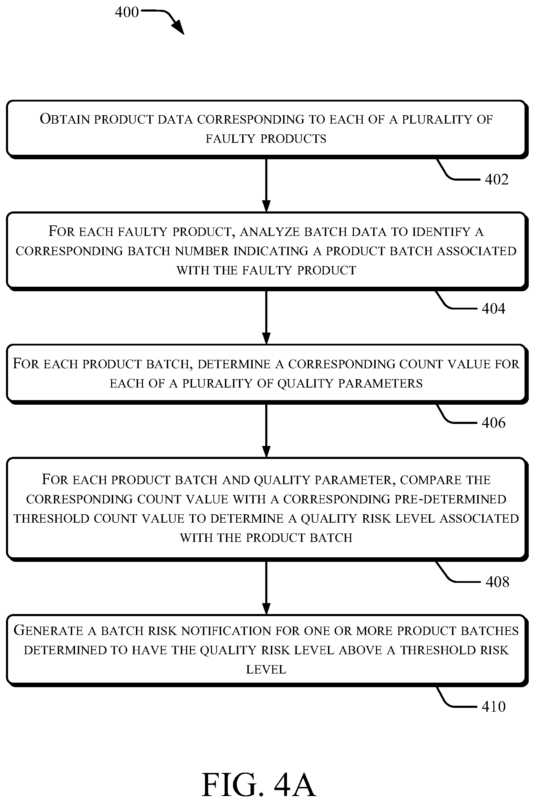

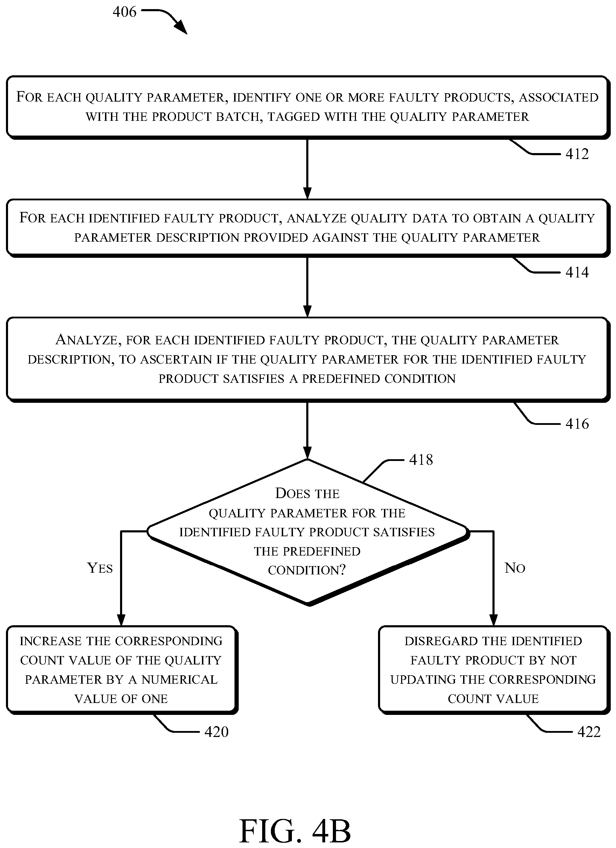

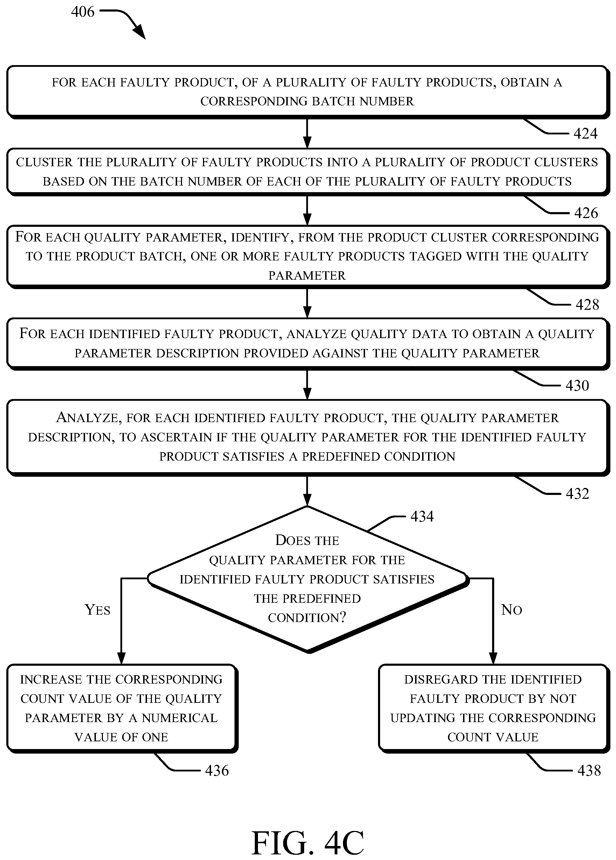

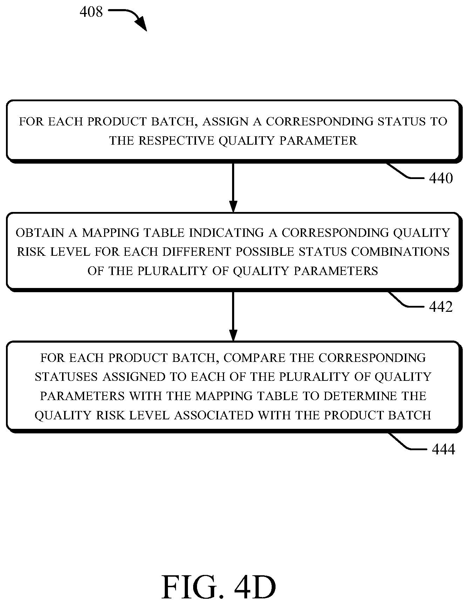

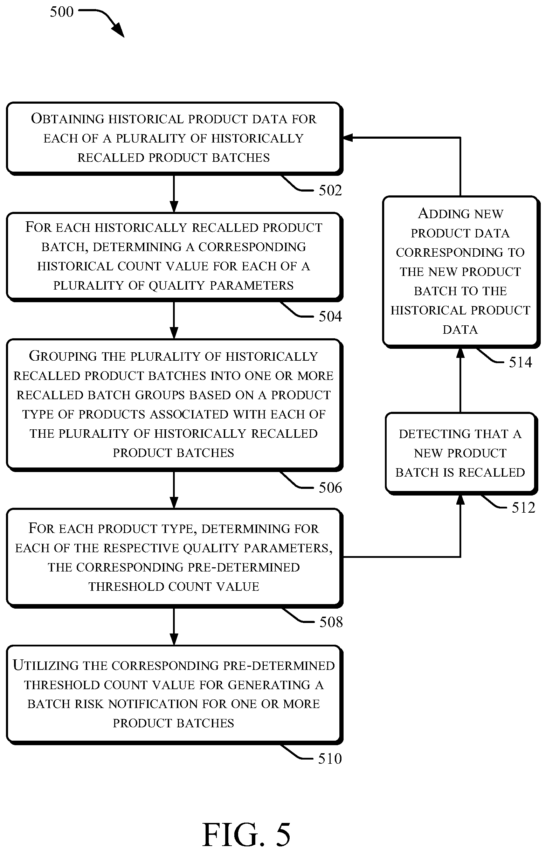

FIG. 4A, FIG. 4B, FIG. 4C, FIG. 4D and FIG. 5 illustrate example methods 400, 406, 406, 408, and 500, respectively, for batch recall assessment by assessing quality risk associated with a product batch and determining threshold count values for utilizing while assessing the quality risk associated with the product batch. The order in which the methods are described is not intended to be construed as a limitation, and any number of the described method blocks may be combined in any order to implement the methods, or an alternative method. Further, the methods 400 and 500 may be implemented by processing resource or computing device(s) through any suitable hardware, non-transitory machine-readable instructions, or combination thereof.

It may also be understood that methods 400, 406, 408, and 500 may be performed by programmed computing devices, such as the system 100, as depicted in FIG. 1 and FIG. 2. Furthermore, the methods 400, 406, 408, and 500 may be executed based on instructions stored in a non-transitory computer-readable medium, as will be readily understood. The non-transitory computer-readable medium may include, for example, digital memories, magnetic storage media, such as one or more magnetic disks and magnetic tapes, hard drives, or optically readable digital data storage media. While the methods 400, 406, 408, and 500 are described below with reference to the system 100 as described above; other suitable systems for the execution of these methods may also be utilized. Additionally, implementation of the methods 400, 406, 408, and 500 is not limited to such examples.

FIG. 4A illustrates the method 400 for batch recall assessment by assessing quality risk associated with a product batch, according to an example.

At block 402, product data corresponding to each of a plurality of faulty products manufactured by an organization may be obtained. In an example, the product data may be obtained from a quality management system implemented for managing and storing data related to quality concerns raised for products manufactured by the organization. In another example, the product data may be pre-stored in a memory of the system 100 and may be obtained from the memory. For each of the plurality of faulty products, the corresponding product data may include batch data of the faulty product and quality data describing a quality concern raised for the faulty product. The batch data may be indicative of a particular product batch associated with the faulty product at the time of manufacturing of the faulty product. In an example, the batch data may include a corresponding batch number which may be a unique identifier assigned to the particular product batch. The quality data may include a quality parameter, from a plurality of quality parameters, indicating the quality concern raised for the faulty product. In an example, the plurality of faulty products may be products for which at least one quality concern has been raised. The quality concern may be indicated by a quality parameter, such as a complaint received against a faulty product, a deviation associated with a faulty product, a corrective and preventive action (CAPA) taken for a faulty product, and a non-conformance assessment of a faulty product.

At block 404, for each faulty product of the plurality of faulty products, the batch data may be analyzed. The batch data may be analyzed to identify a corresponding batch number indicating a product batch associated with the faulty product at the time of manufacturing of the faulty product. Thus, analysis of the batch data facilities in identifying all the product batches to which the plurality of faulty products belongs.

At block 406, for each product batch, a corresponding count value may be determined for each of the plurality of quality parameters. The corresponding count value may be indicative of a number of faulty products, associated with the product batch, tagged with the respective quality parameter in the corresponding quality data. For example, for a product batch having 100 products, the corresponding count value may indicate that a complaint has been received against 10 faulty products, a deviation has been associated with 15 faulty products, a CAPA has been taken for 5 faulty products, and a non-conformance assessment has been performed for 10 faulty products. In an example, the corresponding count value may be a percentage of a number of faulty products, associated with the product batch, tagged with the respective quality parameter.

At block 408, for each product batch, the count value corresponding to each quality parameter may be compared with a corresponding pre-determined threshold count value to determine a quality risk level associated with the product batch. The quality risk level may indicate the level of risk of the entire product batch having a manufacturing defect or flaw. For example, the quality risk level may be one of a low risk, a medium risk, and a high risk. In an example, the corresponding pre-determined threshold count value may be generated based on analysis of historical count values of the quality parameter associated with historically recalled product batches. In an example, the corresponding pre-determined threshold count value may be pre-generated and pre-stored in the system 100.

At block 410, a batch risk notification may be generated for one or more product batches determined to have the quality risk level above a threshold risk level. The batch risk notification may include recommendations for taking corrective actions. In an example, the corrective actions may include recalling of the one or more product batches. In an example, the threshold risk level may be pre-determined and pre-stored in the system 100. In an example, when the corresponding pre-determined threshold count value is breached for a product batch, the batch risk notification may include a suggestion for the organization to recall the product batch.

An example batch risk notification may be "Complaints have been received for 3% of products within the product batch and product batches for these product types have been recalled, historically, at a threshold of 4.5%. Please take corrective action on the product batch and monitor other parameters of deviations, non-conformances, and CAPAs. Overall batch risk is still low and this risk can go to high if the threshold for complaints is breached.". The example batch risk notification indicates that the corresponding count value (in percentage) for complaints is 3%, the corresponding pre-determined threshold count value for complaints is 4.5%, and the quality risk level of the product batch is low. Thus, the described approaches generate an insightful batch risk notification for the organization, enabling the organization to efficiently and quickly recall product batches or take other corrective actions to minimize the monetary losses incurred by the organization due to the faulty products.

FIG. 4B illustrates the method 406 for determining the corresponding count value for each of the plurality of quality parameters at block 406 of FIG. 4A, according to an example.

For determining the corresponding count value for a product batch, at block 412, for a particular quality parameter, one or more faulty products that are associated with the product batch and tagged with the particular quality parameter may be identified. In an example, the one or more faulty products tagged with the quality parameter may be identified based on analysis of the product data.

At block 414, for each identified faulty product, the quality data may be analyzed to obtain a quality parameter description provided against the quality parameter. The quality parameter description may provide details about the quality concern raised for the faulty product. For example, as previously described with reference to FIG. 2, FIG. 3A, and FIG. 3B, when the quality parameter is a complaint, the quality parameter description may include the data fields, such as the complaint ID, the batch ID, the UID/unique device ID (UDI), the complaint type value, the risk assessment and ranking value, and the product status value. When the quality parameter is a deviation, the quality parameter description, as previously described, may include data fields such as the deviation ID, the batch ID, the UID, the risk rating value, the severity value, and the disposition value. Further, when the quality parameter is a CAPA, the quality parameter description, as previously described, may include data fields such as the CAPA ID, the batch ID, the UID, the severity value, the category value, the RPN category, and the threshold breach value. Furthermore, when the quality parameter is a non-conformance assessment, the quality parameter description, as previously described, may include data fields such as the non-conformance ID, the batch ID, the UID, the product quality impact value, the product distributed value, the supplier value, the supplier status value, the supplier part number value, the product related value, the major category value, and the product quality value.

At block 416, for each identified faulty product, the quality parameter description may be analyzed to ascertain if the quality parameter for the identified faulty product satisfies a predefined condition.

In an example, when the respective quality parameter is a complaint received for a faulty product, the quality data may include the complaint type value, the risk assessment and ranking value, and the product status value. In this case, the predefined condition may include at least one of the complaint type value being product and the risk assessment and ranking value being high, and the product status value being product returned.

In an example, when the respective quality parameter is a deviation associated with a faulty product, the quality data may include the risk rating value, the severity value, and the disposition value. In this case, the predefined condition may include at least one of the risk rating value being high, the severity value being high, and the disposition value being return.

In an example, when the respective quality parameter is a CAPA taken for a faulty product, the quality data may include the severity value, the category value, the risk priority number (RPN) category, and the threshold breach value. In this case, the predefined condition may include at least one of the severity value being high, the category value being product, the RPN category being red, and the threshold breach value being true.

In an example, when the respective quality parameter is a non-conformance assessment of a faulty product, the quality data may include the major category value and the product quality value. In this case, the predefined condition may include at least one of the major category value being yes and the product quality value being yes.

At block 418, it is determined whether the quality parameter for the identified faulty product satisfies the predefined condition.

Upon ascertaining that the quality parameter for the identified faulty product satisfies the predefined condition, at block 420, the corresponding count value of the quality parameter may be increased by a numerical value of one.

Upon ascertaining that the quality parameter for the identified faulty product does not satisfy the predefined condition, at block 422, the identified faulty product may be disregarded by not updating the corresponding count value. The corresponding count value is thus increased only when the quality parameter for the identified faulty product satisfies the predefined condition. The predefined condition for the quality parameter may be a condition under which the quality parameter affects the quality risk of the product batch. Thus, the quality parameter for the identified faulty product is only taken into consideration for calculating the corresponding count value when it is ascertained that the quality parameter may have an effect on the quality and the quality risk.

FIG. 4C illustrates the method 406 for determining the corresponding count value for each of the plurality of quality parameters at block 406 of FIG. 4A, according to another example.

At block 424, for each faulty product of a plurality of faulty products, a corresponding batch number may be obtained. The corresponding batch number may indicate a product batch associated with the faulty product at the time of manufacturing of the faulty product. In an example, the corresponding batch number may be obtained based on the analysis of the batch data corresponding to the faulty product.

At block 426, the plurality of faulty products may be clustered into a plurality of product clusters based on the batch number of each of the plurality of faulty products. Each product cluster may include faulty products, from the plurality of faulty products, manufactured as part of a same product batch indicated by a single batch number. Further, each product cluster may correspond to a single product batch corresponding to the single batch number.

For determining the corresponding count value for a product batch, at block 428, for a particular quality parameter, one or more faulty products tagged with the particular quality parameter may be identified from the product cluster corresponding to the product batch.

At block 430, for each identified faulty product, the quality data may be analyzed to obtain a quality parameter description provided against the quality parameter. The quality parameter description may provide details about the quality concern raised for the faulty product. For example, as previously described with reference to FIG. 2, FIG. 3A, and FIG. 3B, when the quality parameter is a complaint, the quality parameter description may include the data fields, such as the complaint ID, the batch ID, the UID/unique device ID (UDI), the complaint type value, the risk assessment and ranking value, and the product status value. When the quality parameter is a deviation, the quality parameter description, as previously described, may include data fields such as the deviation ID, the batch ID, the UID, the risk rating value, the severity value, and the disposition value. Further, when the quality parameter is a CAPA, the quality parameter description, as previously described, may include data fields such as the CAPA ID, the batch ID, the UID, the severity value, the category value, the RPN category, and the threshold breach value. Furthermore, when the quality parameter is a non-conformance assessment, the quality parameter description, as previously described, may include data fields such as the non-conformance ID, the batch ID, the UID, the product quality impact value, the product distributed value, the supplier value, the supplier status value, the supplier part number value, the product related value, the major category value, and the product quality value.

At block 432, for each identified faulty product, the quality parameter description may be analyzed to ascertain if the quality parameter for the identified faulty product satisfies a predefined condition. The predefined condition may be same as previously described with reference to FIG. 4B.

At block 434, it is determined whether the quality parameter for the identified faulty product satisfies the predefined condition. Upon ascertaining that the quality parameter for the identified faulty product satisfies the predefined condition, at block 436, the corresponding count value of the quality parameter may be increased by a numerical value of one. Upon ascertaining that the quality parameter for the identified faulty product does not satisfy the predefined condition, at block 438, the identified faulty product may be disregarded by not updating the corresponding count value. The corresponding count value is thus increased only when the quality parameter for the identified faulty product satisfies the predefined condition. The predefined condition for the quality parameter may be a condition under which the quality parameter affects the quality risk of the product batch. Thus, the quality parameter for the identified faulty product is only taken into consideration for calculating the corresponding count value when it is ascertained that the quality parameter may have an effect on the quality and the quality risk.

FIG. 4D illustrates the method 408 for determining the quality risk level associated with the product batch at block 408 of FIG. 4A, according to an example.

For determining the quality risk level associated with the product batch, at block 440, a corresponding status may be assigned to the respective quality parameter for each product batch. In an example, the corresponding status may be assigned based on a difference between the corresponding count value and the corresponding pre-determined threshold count value. The corresponding status may indicate whether the corresponding pre-determined threshold count value has been breached for the respective quality parameter. For example, a red status may be assigned to the respective quality parameter if the corresponding pre-determined threshold count value is determined to have been breached. Further, a green status may be assigned to the respective quality parameter if the corresponding predetermined threshold count value is not breached.

At block 442, a mapping table may be obtained. The mapping table may indicate a corresponding quality risk level for each different possible status combination of the plurality of quality parameters. For example, if all the quality parameters for a product batch are assigned green status, the corresponding quality risk level may be low risk. Similarly, for different possible status combinations of the plurality of quality parameters, the mapping table may indicate the corresponding quality risk level which may be one of a low risk, a medium risk, and a high risk. In an example, the mapping table may be generated based on a comparison of corresponding pre-determined threshold count values of different quality parameters of the plurality of quality parameters. For example, the quality parameter having highest corresponding pre-determined threshold count value, amongst the plurality of quality parameters, may be assigned highest weightage for assigning the corresponding quality risk level to a product batch. A mapping table, as an example not as a limitation, is given as Table 1 above.

At block 444, for each product batch, the corresponding statuses assigned to each of the plurality of quality parameters may be compared with the mapping table to determine the quality risk level associated with the product batch. The determined quality risk level may then be utilized to generate a batch risk notification for the product batch when the quality risk level is above a threshold risk level. The batch risk notification may include recommendations for taking corrective actions. In an example, the corrective actions may include recalling of the one or more product batches.

FIG. 5 illustrates a method 500 for determining threshold count values for utilizing while assessing quality risk associated with the product batch, according to an example.

At block 502, historical product data, for each of a plurality of historically recalled product batches manufactured by the organization, corresponding to each historically identified faulty product associated with the historically recalled product batch may be obtained. The historical product data corresponding to each historically identified faulty product may include historical quality data describing a quality concern raised for the historically identified faulty product. The historical quality data may include a quality parameter, from the plurality of quality parameters, indicating the quality concern raised for the historically identified faulty product.

At block 504, for each historically recalled product batch, a corresponding historical count value may be determined for each of the plurality of quality parameters. The corresponding historical count value may be indicative of a number of historically identified faulty products, associated with the historically recalled product batch, tagged with the respective quality parameter.

At block 506, the plurality of historically recalled product batches may be grouped into one or more recalled batch groups based on a product type of products associated with each of the plurality of historically recalled product batches. In one example, the product type may depend on different categories of products. For instance, pharmaceutical products, mechanical devices, electronic devices, medicines for a particular disease, etc., may be different product types. In another example, variations of the same product may be identified as a particular product type. For example, a first medicine for a disease, a second medicine for the disease, a particular vehicle of a particular organization, etc. Each of the one or more recalled batch groups may include historically recalled product batches of same product type.

At block 508, for each product type, the corresponding pre-determined threshold count value may be determined for each of the respective quality parameters using a threshold determination model and the corresponding historical count value determined for the historically recalled product batches grouped into the recalled batch group, corresponding to the product type.

At block 510, the corresponding pre-determined threshold count value may be utilized for generating a batch risk notification for one or more product batches, as described with reference to FIG. 4A to FIG. 4D.

At block 512, it may be detected that a new product batch associated with the organization is recalled. The new product batch may not a part of the plurality of historically recalled product batches.

At block 514, new product data corresponding to the new product batch may be added to the historical product data for updating the corresponding predetermined threshold count value. Thus, the corresponding pre-determined threshold count value may be modified based on the new product data corresponding to new faulty products within the new product batch. In an example, the corresponding pre-determined threshold count value may be updated every time a new product batch associated with the organization is recalled.

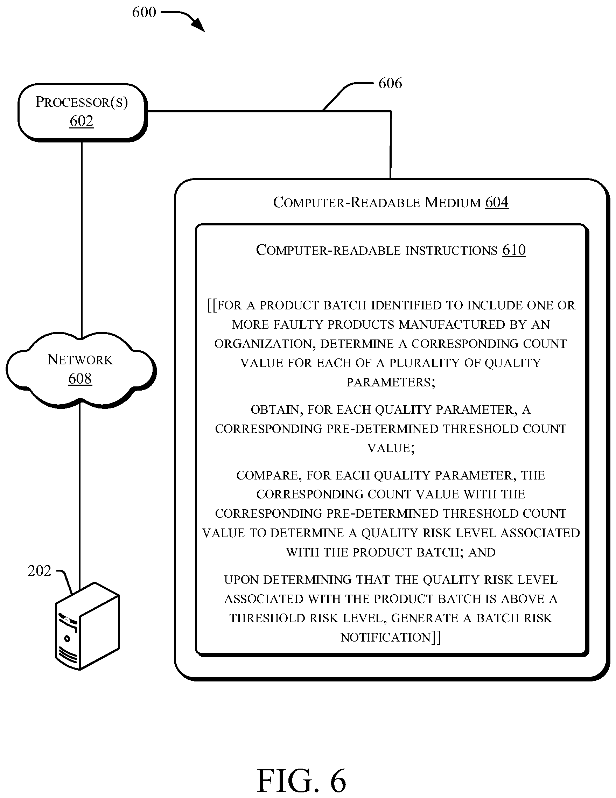

FIG. 6 illustrates a computing environment 600 implementing a non-transitory computer-readable medium for batch recall assessment by assessing quality risk associated with a product batch, according to an example. In an example, the computing environment 600 includes processor(s) 602 communicatively coupled to a non-transitory computer-readable medium 604 through a communication link 606. In one example, the communication link 606 may be similar to the communication network 206, as described in conjunction with the preceding figures. In an example implementation, the computing environment 600 may be for example, the computing environment 200. In an example, the processor(s) 602 may have one or more processing resources for fetching and executing computer-readable instructions from the non-transitory computer-readable medium 604. The processor(s) 602 and the non-transitory computer-readable medium 604 may be implemented, for example, in the system 100 (as has been described in conjunction with the preceding figures).

The non-transitory computer-readable medium 604 may be, for example, an internal memory device or an external memory device. In an example implementation, the communication link 606 may be a network communication link. The processor(s) 602 and the non-transitory computer-readable medium 604 may also be communicatively coupled to the data server 202 over a network 608. The network 608 may be similar to the communication network 206 described in conjunction with FIG. 2.

In an example implementation, the non-transitory computer-readable medium 604 may include a set of computer-readable instructions 610 which may be accessed by the processor(s) 602 through the communication link 606. Referring to FIG. 6, in an example, for a product batch identified to include one or more faulty products manufactured by an organization, the non-transitory computer-readable medium 604 may include instructions 610 that may cause the processor(s) 602 to determine a corresponding count value for each of a plurality of quality parameters. Each of the plurality of quality parameters may be indicative of a corresponding quality concern raised for a faulty product. In an example, the plurality of faulty products may be products for which at least one quality concern has been raised. Examples of the plurality of quality parameters may include, but are not limited to, a complaint received against a faulty product, a deviation associated with a faulty product, a corrective and preventive action (CAPA) taken for a faulty product, and a non-conformance assessment of a faulty product. The corresponding count value may be indicative of a number of faulty products, associated with the product batch, tagged with the respective quality parameter. For example, for a product batch having 100 products, the corresponding count value may indicate that a complaint has been received against 10 faulty products, a deviation has been associated with 15 faulty products, a CAPA has been taken for 5 faulty products, and a non-conformance assessment has been performed for 10 faulty products. In an example, the corresponding count value may be a percentage of a number of faulty products, associated with the product batch, tagged with the respective quality parameter.

The instructions 610 may further cause the processor(s) 602, in one example, to obtain a pre-determined threshold count value corresponding to each quality parameter. In an example, the pre-determined threshold count value may be generated based on analysis of historical count values of the quality parameter associated with historically recalled product batches. In an example, the corresponding pre-determined threshold count value may be pre-generated and pre-stored in the system 100.

In one example, for each quality parameter, the instructions 610 may cause the processor(s) 602 to compare the corresponding count value with the corresponding pre-determined threshold count value to determine a quality risk level associated with the product batch. The quality risk level may indicate the level of risk of the entire product batch having a manufacturing defect or flaw. For example, the quality risk level may be one of a low risk, a medium risk, and a high risk.

Upon determining that the quality risk level associated with the product batch is above a threshold risk level, the instructions 610 may further cause the processor(s) 602 to generate a batch risk notification. The batch risk notification may include recommendations for taking corrective actions. In an example, the corrective actions may include recalling of the one or more product batches. In an example, the threshold risk level may be pre-determined and pre-stored in the system 100. In an example, when the corresponding pre-determined threshold count value is breached for a product batch, the batch risk notification may include a suggestion for the organization to recall the product batch.

An example batch risk notification may be "Complaints have been received for 3% of products within the product batch and product batches for these product types have been recalled, historically, at a threshold of 4.5%. Please take corrective action on the product batch and monitor other parameters of deviations, non-conformances, and CAPAs. Overall batch risk is still low and this risk can go to high if the threshold for complaints is breached.". The example batch risk notification indicates that the corresponding count value (in percentage) for complaints is 3%, the corresponding pre-determined threshold count value for complaints is 4.5%, and the quality risk level of the product batch is low. Thus, the described approaches generate an insightful batch risk notification for the organization, enabling the organization to efficiently and quickly recall product batches or take other corrective actions to minimize the monetary losses incurred by the organization due to the faulty products.

For determining the corresponding count value for the product batch, in one example, the instructions 610 may further cause the processor(s) 602 to, for a particular quality parameter, identify one or more faulty products that are associated with the product batch and tagged with the particular quality parameter.

In one example, the instructions 610 may further cause the processor(s) 602 to obtain quality data corresponding to each of the identified faulty products. The quality data may describe a quality concern raised for the identified faulty product. The quality data may include the quality parameter, from the plurality of quality parameters, indicating the quality concern raised for the identified faulty product.

In an example, for each identified faulty product, the instructions 610 may further cause the processor(s) 602 to analyze the quality data to obtain a quality parameter description provided against the quality parameter. The quality parameter description may provide details about the quality concern raised for the faulty product. For example, as previously described with reference to FIG. 2, FIG. 3A, and FIG. 3B, when the quality parameter is a complaint, the quality parameter description may include the data fields, such as the complaint ID, the batch ID, the UID/unique device ID (UDI), the complaint type value, the risk assessment and ranking value, and the product status value. When the quality parameter is a deviation, the quality parameter description, as previously described, may include data fields such as the deviation ID, the batch ID, the UID, the risk rating value, the severity value, and the disposition value. Further, when the quality parameter is a CAPA, the quality parameter description, as previously described, may include data fields such as the CAPA ID, the batch ID, the UID, the severity value, the category value, the RPN category, and the threshold breach value. Furthermore, when the quality parameter is a non-conformance assessment, the quality parameter description, as previously described, may include data fields such as the non-conformance ID, the batch ID, the UID, the product quality impact value, the product distributed value, the supplier value, the supplier status value, the supplier part number value, the product related value, the major category value, and the product quality value.

In one example, the instructions 610 may cause the processor(s) 602 to analyze the quality parameter description, for each identified faulty product, to ascertain if the quality parameter for the identified faulty product satisfies a predefined condition.

In an example, when the respective quality parameter is a complaint received for a faulty product, the quality data may include the complaint type value, the risk assessment and ranking value, and the product status value. In this case, the predefined condition may include at least one of the complaint type value being product and the risk assessment and ranking value being high, and the product status value being product returned.

In an example, when the respective quality parameter is a deviation associated with a faulty product, the quality data may include the risk rating value, the severity value, and the disposition value. In this case, the predefined condition may include at least one of the risk rating value being high, the severity value being high, and the disposition value being return.

In an example, when the respective quality parameter is a CAPA taken for a faulty product, the quality data may include the severity value, the category value, the risk priority number (RPN) category, and the threshold breach value. In this case, the predefined condition may include at least one of the severity value being high, the category value being product, the RPN category being red, and the threshold breach value being true.

In an example, when the respective quality parameter is a non-conformance assessment of a faulty product, the quality data may include the major category value and the product quality value. In this case, the predefined condition may include at least one of the major category value being yes and the product quality value being yes.

In an example, upon ascertaining that the quality parameter for the identified faulty product satisfies the predefined condition, the instructions 610 may cause the processor(s) 602 to increase the corresponding count value of the quality parameter by a numerical value of one. Further, in an example, upon ascertaining that the quality parameter for the identified faulty product does not satisfy the predefined condition, the instructions 610 may cause the processor(s) 602 to disregard the identified faulty product by not updating the corresponding count value. The corresponding count value is thus increased only when the quality parameter for the identified faulty product satisfies the predefined condition. The predefined condition for the quality parameter may be a condition under which the quality parameter affects the quality risk of the product batch. Thus, the quality parameter for the identified faulty product is only taken into consideration for calculating the corresponding count value when it is ascertained that the quality parameter may have an effect on the quality and the quality risk.

In one example, for determining threshold count values for utilizing while assessing quality risk associated with the product batch, the instructions 610 may cause the processor(s) 602 to obtain historical product data, for each of a plurality of historically recalled product batches manufactured by the organization, corresponding to each historically identified faulty product associated with the historically recalled product batch. The historical product data corresponding to each historically identified faulty product may include historical quality data describing a quality concern raised for the historically identified faulty product. The historical quality data may include a quality parameter, from the plurality of quality parameters, indicating the quality concern raised for the historically identified faulty product.

For each historically recalled product batch, the instructions 610 may further cause the processor(s) 602 to determine a corresponding historical count value for each of the plurality of quality parameters. The corresponding historical count value may be indicative of a number of historically identified faulty products, associated with the historically recalled product batch, tagged with the respective quality parameter.

The instructions 610 may further cause the processor(s) 602 to group the plurality of historically recalled product batches into one or more recalled batch groups based on a product type of products associated with each of the plurality of historically recalled product batches. In one example, the product type may depend on different categories of products. For instance, pharmaceutical products, mechanical devices, electronic devices, medicines for a particular disease, etc., may be different product types. In another example, variations of the same product may be identified as a particular product type. For example, a first medicine for a disease, a second medicine for the disease, a particular vehicle of a particular organization, etc. Each of the one or more recalled batch groups may include historically recalled product batches of same product type.

For each product type, the instructions 610 may cause the processor(s) 602 to determine the corresponding pre-determined threshold count value for each of the respective quality parameters using a threshold determination model and the corresponding historical count value determined for the historically recalled product batches grouped into the recalled batch group, corresponding to the product type. The corresponding pre-determined threshold count value may then be utilized for generating the batch risk notification for one or more product batches, as described previously.

In an example, the instructions 610 may further cause the processor(s) 602 to detect that a new product batch associated with the organization is recalled. The new product batch may not a part of the plurality of historically recalled product batches. The instructions 610 may further cause the processor(s) 602 to modify the corresponding pre-determined threshold count value based on new product data corresponding to new faulty products within the new product batch. Thus, the corresponding pre-determined threshold count value may be updated every time a new product batch associated with the organization is recalled.

In an example, for determining the quality risk level associated with the product batch, the instructions 610 may cause the processor(s) 602 to assign a corresponding status to the respective quality parameter for each product batch. In an example, the corresponding status may be assigned based on a difference between the corresponding count value and the corresponding pre-determined threshold count value. The corresponding status may indicate whether the corresponding pre-determined threshold count value has been breached for the respective quality parameter. For example, a red status may be assigned to the respective quality parameter if the corresponding pre-determined threshold count value is determined to have been breached. Further, a green status may be assigned to the respective quality parameter if the corresponding pre-determined threshold count value is not breached.

The instructions 610 may cause the processor(s) 602 to obtain a mapping table indicating a corresponding quality risk level for each different possible status combination of the plurality of quality parameters. For example, if all the quality parameters for a product batch are assigned green status, the corresponding quality risk level may be low risk. Similarly, for different possible status combinations of the plurality of quality parameters, the mapping table may indicate the corresponding quality risk level which may be one of a low risk, a medium risk, and a high risk. In an example, the mapping table may be generated based on a comparison of corresponding pre-determined threshold count values of different quality parameters of the plurality of quality parameters. For example, the quality parameter having highest corresponding pre-determined threshold count value, amongst the plurality of quality parameters, may be assigned highest weightage for assigning the corresponding quality risk level to a product batch. A mapping table, as an example not as a limitation, is given as Table 1 above.

For each product batch, the instructions 610 may cause the processor(s) 602 to compare the corresponding statuses assigned to each of the plurality of quality parameters with the mapping table to determine the quality risk level associated with the product batch. The determined quality risk level may then be utilized to generate the batch risk notification for the product batch when the quality risk level is above a threshold risk level.

Although examples for the present disclosure have been described in language specific to structural features and/or methods, it is to be understood that the appended claims are not necessarily limited to the specific features or methods described. Rather, the specific features and methods are disclosed and explained as examples of the present disclosure.

## Claims

1. A system comprising:
a data acquisition engine to:
obtain product data corresponding to each of a plurality of faulty products manufactured by an organization, wherein for each of the plurality of faulty products, the corresponding product data includes batch data of the faulty product and quality data describing a quality concern raised for the faulty product, wherein the quality data includes a quality parameter, from a plurality of quality parameters, indicating the quality concern raised for the faulty product;
a faulty batch identification engine to:
for each faulty product, of the plurality of faulty products, analyze the batch data to identify a corresponding batch number indicating a product batch associated with the faulty product at the time of manufacturing of the faulty product;
a batch risk assessment engine to:
for each product batch,
determine a corresponding count value for each of the plurality of quality parameters, wherein the corresponding count value is indicative of a number of faulty products, associated with the product batch, tagged with the respective quality parameter in the corresponding quality data; and
compare, for each quality parameter, the corresponding count value with a corresponding pre-determined threshold count value to determine a quality risk level associated with the product batch; and
a batch recall recommendation engine to:
generate a batch risk notification for one or more product batches determined to have the quality risk level above a threshold risk level, the batch risk notification including recommendations for taking corrective actions, including recalling of the one or more product batches.

2. The system of claim **1,** wherein the plurality of quality parameters includes a complaint received against a faulty product, a deviation associated with a faulty product, a corrective and preventive action, CAPA, taken for a faulty product, and a non-conformance assessment of a faulty product.

3. The system of claim **1,** wherein the faulty batch identification engine is to:
cluster the plurality of faulty products into a plurality of product clusters based on the batch number of each of the plurality of faulty products, wherein each product cluster includes faulty products, from the plurality of faulty products, manufactured as part of a same product batch indicated by a single batch number, and wherein each product cluster corresponds to a single product batch corresponding to the single batch number.

4. The system of claim 3, wherein, to determine the corresponding count values for each product batch, the batch risk assessment engine is to:
for each quality parameter, from the plurality of quality parameters,
identify, from the product cluster corresponding to the product batch, one or more faulty products tagged with the quality parameter;
for each identified faulty product, analyze the quality data to obtain a quality parameter description provided against the quality parameter;
analyze, for each identified faulty product, the quality parameter description, to ascertain if the quality parameter for the identified faulty product satisfies a predefined condition;
upon ascertaining that the quality parameter for the identified faulty product satisfies the predefined condition, increase the corresponding count value of the quality parameter by a numerical value of one; and
upon ascertaining that the quality parameter for the identified faulty product does not satisfy the predefined condition, disregard the identified faulty product by not updating the corresponding count value.

5. The system of claim **1,** wherein the system comprises:
a threshold determination engine to:
obtain, for each of a plurality of historically recalled product batches manufactured by the organization, historical product data corresponding to each historically identified faulty product associated with the historically recalled product batch, wherein the historical product data corresponding to each historically identified faulty product includes historical quality data describing a quality concern raised for the historically identified faulty product, and wherein the historical quality data includes a quality parameter, from the plurality of quality parameters, indicating the quality concern raised for the historically identified faulty product;
for each historically recalled product batch, determine a corresponding historical count value for each of the plurality of quality parameters, wherein the corresponding historical count value is indicative of a number of historically identified faulty products, associated with the historically recalled product batch, tagged with the respective quality parameter;
group the plurality of historically recalled product batches into one or more recalled batch groups based on a product type of products associated with each of the plurality of historically recalled product batches, wherein each of the one or more recalled batch groups includes historically recalled product batches of same product type; and
for each product type, determine for each of the respective quality parameters, the corresponding pre-determined threshold count value using a threshold determination model and the corresponding historical count value determined for the historically recalled product batches grouped into the recalled batch group corresponding to the product type.

6. The system of claim 5, wherein the threshold determination engine is to:
detect that a new product batch associated with the organization is recalled, wherein the new product batch is not a part of the plurality of historically recalled product batches; and
modify the corresponding pre-determined threshold count value based on new product data corresponding to new faulty products within the new product batch.

7. The system of claim **1,** wherein the batch risk assessment engine is to:
for each product batch, assign a corresponding status to the respective quality parameter based on a difference between the corresponding count value and the corresponding pre-determined threshold count value, wherein the corresponding status indicates if the corresponding pre-determined threshold count value is breached for the respective quality parameter;
obtain a mapping table indicating a corresponding quality risk level for each different possible status combination of the plurality of quality parameters, wherein the mapping table is generated based on a comparison of corresponding pre-determined threshold count values of different quality parameters of the plurality of quality parameters; and
for each product batch, compare the corresponding statuses assigned to each of the plurality of quality parameters with the mapping table to determine the quality risk level associated with the product batch.

8. A method comprising:
obtaining product data corresponding to each of a plurality of faulty products manufactured by an organization, wherein for each of the plurality of faulty products, the corresponding product data includes batch data of the faulty product and quality data describing a quality concern raised for the faulty product, wherein the quality data includes a quality parameter, from a plurality of quality parameters, indicating the quality concern raised for the faulty product;
for each faulty product, of the plurality of faulty products, analyzing the batch data to identify a corresponding batch number indicating a product batch associated with the faulty product at the time of manufacturing of the faulty product;
for each product batch,
determining a corresponding count value for each of the plurality of quality parameters, wherein the corresponding count value is indicative of a number of faulty products, associated with the product batch, tagged with the respective quality parameter in the corresponding quality data; and
comparing, for each quality parameter, the corresponding count value with a corresponding pre-determined threshold count value to determine a quality risk level associated with the product batch; and
generating a batch risk notification for one or more product batches determined to have the quality risk level above a threshold risk level, the batch risk notification including recommendations for taking corrective actions, including recalling of the one or more product batches.

9. The method of claim 8, wherein the plurality of quality parameters includes a complaint received against a faulty product, a deviation associated with a faulty product, a corrective and preventive action, CAPA, taken for a faulty product, and a non-conformance assessment of a faulty product.

10. The method of claim 8, wherein determining the corresponding count value for each product batch comprises:
for each quality parameter, from the plurality of quality parameters,
identifying one or more faulty products, associated with the product batch, tagged with the quality parameter;
for each identified faulty product, analyzing the quality data to obtain a quality parameter description provided against the quality parameter;
analyzing, for each identified faulty product, the quality parameter description, to ascertain if the quality parameter for the identified faulty product satisfies a predefined condition;
upon ascertaining that the quality parameter for the identified faulty product satisfies the predefined condition, increasing the corresponding count value of the quality parameter by a numerical value of one; and
upon ascertaining that the quality parameter for the identified faulty product does not satisfy the predefined condition, disregarding the identified faulty product by not updating the corresponding count value.

11. The method of claim 10, wherein, for the respective quality parameter being a complaint received for a faulty product, the quality data includes a complaint type value, a risk assessment and ranking value, and a product status value, and wherein the predefined condition includes at least one of:
the complaint type value being product and the risk assessment and ranking value being high; and
the product status value being product returned.

12. The method of claim 10, wherein, for the respective quality parameter being a deviation associated with a faulty product, the quality data includes a risk rating value, a severity value, and a disposition value, and wherein the predefined condition includes at least one of:
the risk rating value being high;
the severity value being high; and
the disposition value being return.

13. The method of claim 10, wherein, for the respective quality parameter being a corrective and preventive action, CAPA, taken for a faulty product, the quality data includes a severity value, a category value, a risk priority number, RPN, category, and a threshold breach value, and wherein the predefined condition includes at least one of:
the severity value being high;
the category value being product;
the RPN category being red; and
the threshold breach value being true.

14. The method of claim 10, wherein, for the respective quality parameter being a non-conformance assessment of a faulty product, the quality data includes a major category value and a product quality value, and wherein the predefined condition includes at least one of:
the major category value being yes; and
the product quality value being yes.

15. A non-transitory computer-readable medium comprising instructions for batch recall assessment by assessing quality risk associated with a product batch, the instructions being executable by a processing resource to:
for a product batch identified to include one or more faulty products manufactured by an organization, determine a corresponding count value for each of a plurality of quality parameters, wherein the corresponding count value is indicative of a number of faulty products, associated with the product batch, tagged with the respective quality parameter, and wherein each of the plurality of quality parameters is indicative of a corresponding quality concern raised for a faulty product;
obtain, for each quality parameter, a corresponding pre-determined threshold count value generated based on analysis of historical count values of the quality parameter associated with historically recalled product batches;
compare, for each quality parameter, the corresponding count value with the corresponding pre-determined threshold count value to determine a quality risk level associated with the product batch; and
upon determining that the quality risk level associated with the product batch is above a threshold risk level, generate a batch risk notification including recommendations for taking corrective actions, including recalling of the one or more product batches.
